# FASCICULE DE BREVET EUROPEEN

(11) **EP 2 366 237 B1**
(45) Date de publication et mention de la délivrance du brevet: **16.01.2013**
(21) Numéro de dépôt: 09749111.2
(22) Date de dépôt: 06.11.2009
(51) Int. Cl.: G06F 12/14, H04L 12/70

(54) **EQUIPEMENT AVIONIQUE SECURISE ET PROCEDE DE SECURISATION ASSOCIE**
SICHERE AVIONICGERÄTE UND DIESBEZÜGLICHES VERFAHREN ZUR SICHERUNG
SECURE AVIONICS EQUIPMENT AND ASSOCIATED METHOD OF MAKING SECURE

(30) Priorité: 17.11.2008 FR 0857783
(43) Date de publication de la demande: 21.09.2011
(73) Titulaire: SAGEM Défense Sécurité, 75015 Paris (FR)
(72) Inventeur: LABARRE, Etienne, F-75015 Paris (FR); VOGTENBERGER, Philippe, F-75015 Paris (FR)
(74) Mandataire: Regimbeau
(86) Numéro de dépôt international: PCT/EP2009/064735
(87) Numéro de publication internationale: WO 2010/054983

(56) Documents cités:
- M. YOUNIS, M. ABOUTABL, D. KIM: "Robust Approach for Supporting Inter-Application Communication and Device Handling in Integrated Modular Avionics" PROCEEDINGS OF THE 15TH INTERNATIONAL CONFERENCE ON PARALLEL AND DISTRIBUTED COMPUTING SYSTEMS (PDCS 2002), LOUISVILLE, KY, [Online] XP002539321 September 2002 Extrait de l'Internet: URL:http://www.csee.umbc.edu/~younis/Publi cations/PDCS2002/Younis_PDCS2002.pdf> [extrait le 2002-09]
- ARINC: "AFDX / ARINC 664 Tutorial (1500-049)" INTERNET CITATION, [Online] XP002429136 Extrait de l'Internet: URL:http://www.acalmicrosystems.co.uk/whit epapers/sbs8.pdf?PHPSESSID=bd03 0f1b97f284d41ec00cf1ea2d5226> [extrait le 2007-04-12]
- MUKHERJEE S S ET AL: "MAKING NETWORK INTERFACES LESS PERIPHERAL" COMPUTER, IEEE SERVICE CENTER, LOS ALAMITOS, CA, US, vol. 31, no. 10, 1 octobre 1998 (1998-10-01), pages 70-76, XP000859749 ISSN: 0018-9162
- ALENA R L ET AL: "Communications for Integrated Modular Avionics" AEROSPACE CONFERENCE, 2007 IEEE, IEEE, PISCATAWAY, NJ, USA, 3 mars 2007 (2007-03-03), pages 1-18, XP031214239 ISBN: 978-1-4244-0524-4
- LEONARD GAGEA ET AL: "Designing devices for avionics applications and the DO-254 guideline" SEMICONDUCTOR CONFERENCE, 2008. CAS 2008. INTERNATIONAL, IEEE, PISCATAWAY, NJ, USA, 13 octobre 2008 (2008-10-13), pages 377-380, XP031372927 ISBN: 978-1-4244-2004-9

## Description

Le domaine de l'invention est celui des équipements avioniques.

L'invention concerne plus précisément les équipements embarqués dans un aéronef qui fournissent une interface de communication avec un réseau avionique destiné à servir de support aux communications internes de l'aéronef, par exemple une interface de communication pour un réseau avionique ARINC 664 (notamment réseau AFDX - Avionics Full Duplex), ou encore une interface de type Bus CAN, USB ou HDLC.

Les systèmes avioniques comprennent aujourd'hui des équipements distants de type capteurs ou actionneurs de plus en plus intelligents. Il s'agit notamment d'équipements critiques de commande de vol, par exemple des vérins électriques, qui sont non seulement commandés par un contrôleur central mais également aptes à élaborer des rapports destinés au contrôleur central.

Le document intitulé "Robust Approach for Supporting Inter-Application Communication and Device Handling in Integrated Modular Avionics" rédigé par M.YOUNIS, M.ABOUTABL et D.KIM et publié dans les PROCEEDINGS OF THE 15TH INTERNATIONAL CONFERENCE ON PARALLEL AND DISTRIBUTED COMPUTING SYSTEMS traite de la problématique d'une communication sécurisée entre applications au sein d'un système embarqué d'un équipement avionique.

Un équipement avionique remplit ainsi généralement une fonction critique en ce sens que la fourniture d'informations erronées non détectées peut avoir des conséquences catastrophiques pour la sécurité de l'aéronef et de ses passagers. La criticité est notamment définie dans le domaine d'application de l'invention par les référentiels aéronautiques suivants : CS25.1309 / ARP-4754 / DO-254 / DO-178B.

Il est aujourd'hui pratique courante de développer un composant électronique spécifique de type ASIC (ou FPGA, PLD) pour remplir la fonction d'interface AFDX d'un équipement avionique, ce composant étant relié à un processeur qui réalise les autres fonctions - notamment des fonctions critiques - de l'équipement.

Cette solution s'avère toutefois complexe et coûteuse dans la mesure où le composant ASIC doit être développé dans un souci de garantir un bon niveau d'assurance conception (niveau A et B de la spécification DO-254).

L'invention a pour objectif de proposer une technique qui permette de s'affranchir de cet inconvénient, en permettant de réaliser la fonction d'interface AFDX de manière plus simple et moins coûteuse tout en garantissant la sécurité du système avionique.

A cet effet, l'invention propose un équipement électronique comprenant un processeur, une mémoire et un module de communication assurant une interface avec un réseau de données avionique, caractérisé en ce que le module de communication et le processeur sont embarqués au sein d'un microcontrôleur de sorte que la mémoire est partagée entre le processeur et le module de communication, et en ce qu'il comporte en outre un module de surveillance des accès à la mémoire configurés pour détecter un accès du module de communication dans une zone d'adresses non autorisée de la mémoire.

Certains aspects préférés, mais non limitatifs, de cet équipement sont les suivants :
- le module de surveillance est configuré pour déclencher une interruption et une remise à l'état initial du microcontrôleur en cas d'accès du module de communication en écriture dans la zone d'adresses non autorisée ;
- la zone d'adresses non autorisée correspond à une zone d'adresses réservée au logiciel s'exécutant sur le processeur ;
- la zone d'adresses non autorisée est préalablement définie lors de la conception de l'équipement électronique ;
- le processeur et le module de communication sont reliés à la mémoire par l'intermédiaire d'un bus commun;
- le processeur comporte une unité de gestion mémoire responsable de l'accès à la mémoire principale demandé par le processeur ;
- le module de communication fournit une interface AFDX avec le réseau avionique ;
- le processeur est configuré pour calculer une somme de contrôle pour des trames de données issues du module de communication avant leur transmission sur le réseau avionique ;
- le module de surveillance est un dispositif électronique simple au sens de la spécification DO-254 ; et
- le processeur est programmé pour réaliser une fonction critique au sens de la spécification DO-254.

Selon un second aspect, l'invention concerne un procédé de sécurisation d'un équipement électronique comprenant un processeur et un module de communication assurant une interface avec un réseau de données avionique, le processeur et le module de communication étant embarqués au sein d'un microcontrôleur de sorte qu'ils partagent une même mémoire, comprenant la mise en oeuvre d'une surveillance des accès à la mémoire partagée pour détecter un accès du module de communication dans une zone d'adresses non autorisée.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels:
- la figure 1 est un schéma représentant un équipement conforme à un mode de réalisation possible du premier aspect de l'invention ;
- la figure 2 illustre les accès mémoire réalisé par le module de communication d'un équipement conforme à un mode de réalisation possible du premier aspect de l'invention ;
- la figure 3 est un schéma de principe représentant un mode de réalisation possible d'un module de surveillance des accès mémoire destiné à être intégré dans un équipement selon le premier aspect de l'invention

Selon un premier aspect, l'invention concerne un équipement comprenant un processeur, une fonction mémoire et un module de communication assurant une interface de communication avec un réseau avionique.

Dans le cadre de l'invention, il est proposé de regrouper la fonction d'interface avec le réseau avionique (réseau AFDX dans l'exemple non limitatif de réalisation de l'invention qui sera considéré par la suite) avec les autres fonctions de l'équipement avionique sur un même composant de type micro-contrôleur, la fonction AFDX étant déléguée à un périphérique complexe interne spécifique du microcontrôleur.

L'équipement selon le premier aspect de l'invention comporte ainsi un module de communication (chargé de la fonction d'interface AFDX) et un processeur (chargé des autres fonctions, notamment critiques, de l'équipement) tous deux embarqués au sein d'un même composant de type microcontrôleur.

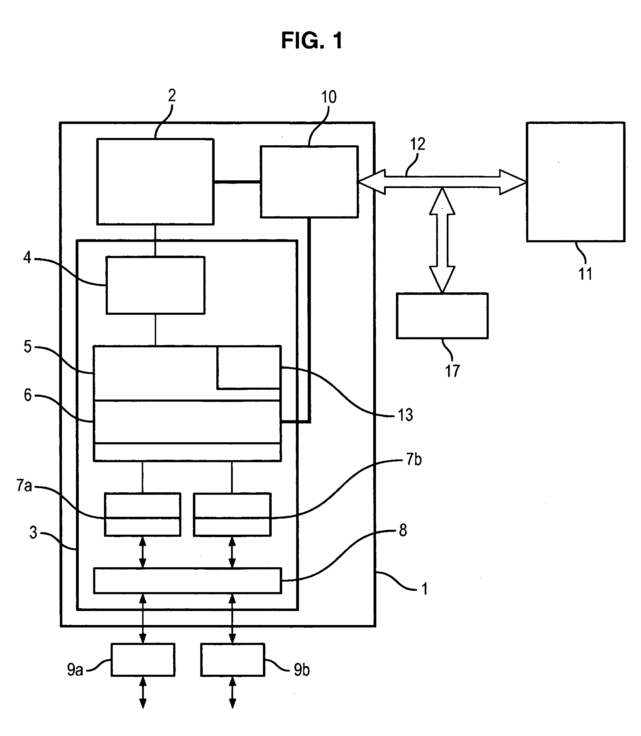

On a représenté sur la figure 1 un schéma de principe d'un équipement avionique selon le premier aspect de l'invention. L'équipement comporte en particulier un microcontrôleur 1 intégrant un coeur processeur 2, un module de communication 3 destiné à assurer l'interface avec un réseau avionique et une unité d'interface 10 incorporant notamment un contrôleur de mémoire et un arbitre de bus.

Le microcontrôleur 1 est par exemple le microcontrôleur MPC 8270 de la société Freescale. Dans la terminologie associée à ce microcontrôleur MPC 8270, le processeur est dénommé coeur processeur (« PowerPC Core »), le module de communication est dénommé Module Processeur de Communication (« Communication Processor Module »). On notera que sur la figure 1, seuls les éléments du microcontrôleur 1 nécessaires à la compréhension de l'invention ont été représentés.

Le module de communication 3 comporte notamment une mémoire 4 de type RAM, par exemple une mémoire DPRAM (« Dual Ported Random Access Memory »), et un processeur de communication 5 (« Communication Processor ») doté d'un microprocesseur et d'une mémoire 6 de type ROM ou RAM dans laquelle est stocké un microcode définissant le fonctionnement du module de communication 3.

Dans l'exemple de réalisation ici présenté, deux contrôleurs Ethernet 7a, 7b (typiquement des contrôleurs de communication rapide FCC selon la terminologie anglo-saxonne « Fast Communication Controller ») du module de communication 3 sont utilisés pour réaliser les opérations d'interface avec le réseau avionique AFDX. Les contrôleurs Ethernet 7a, 7b communiquent avec des modules d'émission-réception 9a, 9b (par exemple du type LXT973 dans le cas du bus AFDX) via une interface 8 (par exemple une interface indépendante du média MII comme spécifié par la norme Ethernet IEEE802.3 en particulier une interface MII par canal FCC).

L'unité d'interface système 10 est reliée à une mémoire principale 11, par exemple une mémoire de type RAM par l'intermédiaire d'un bus mémoire 12.

On retiendra que le processeur 2 comporte par ailleurs une unité de gestion mémoire MMU (pour Memory Management Unit) responsable de l'accès à la mémoire principale 11 demandé par le processeur 2 et qui garantit le niveau de sécurité nécessaire dans le domaine d'application de l'invention dans le cadre du fonctionnement du logiciel sur le coeur processeur 2.

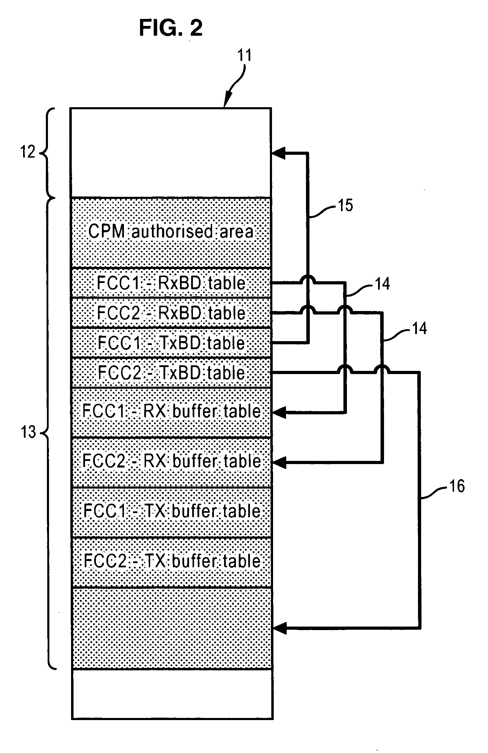

Le fonctionnement est globalement le suivant :
- les trames de données AFDX sont écrites ou lues par le processeur 2 dans la mémoire principale 11 ;
- les trames de données AFDX sont écrites ou lues par le module de communication 3 dans la mémoire principale 11 via des accès direct mémoire (DMA - Direct Access Memory) initiés par le module de communication 3 ;
- le processeur 2 et le module de communication 3 partagent le bus 12 sous le contrôle de l'arbitre de bus de l'unité d'interface système 10 ;
- les échanges sont contrôlés par un descripteur de trame stocké dans la mémoire principale. Plus précisément, pour chacun des contrôleurs Ethernet 7a, 7b (désignés par FCC1 et FCC2 sur la figure 2), les trames sont organisées dans le module de communication au sein de la mémoire 4 de type RAM de manière à correspondre à un table de description de tampon (« Buffer Descriptor Table» - « BD table » sur la figure 2) dans la mémoire principale 11, la table de description de tampon comprenant notamment un champ de pointeur pointant vers une table de tampon (« Buffer table » sur la figure 2) dans la mémoire principale 11 où une trame AFDX reçue ou à transmettre est stockée ;
- seul un pointeur vers l'adresse de la mémoire principale où la table de description de tampon est située est stocké dans la mémoire RAM 4 du module de communication 3 (non protégée par code correcteur d'erreur ECC).

Dans le domaine d'application de l'invention, le processeur 2 du microcontrôleur 1 (par exemple le microcontrôleur MPC 8270 de Freescale) ne nécessite pas de justifications particulières : on considère effectivement du point de vue certification que les processeurs sont couverts par les vérifications des logiciels qu'ils supportent (norme DO 178B).

En revanche, on ne dispose pas de garantie d'assurance conception pour le module de communication 3. En effet, le microcode définissant le fonctionnement du module de communication est développé par le concepteur du microcontrôleur. Or le concepteur n'apporte aucun support pour la justification du module de communication, ni côté matériel, ni côté microcode, de sorte que le module de communication 3 est un composant dont le niveau d'assurance développement n'est pas connu par manque d'informations ; de ce fait, la justification « composant complexe » au sens des certifications avioniques est difficile à obtenir.

Une des problématiques à résoudre est alors de garantir que les anomalies et défaillances du module de communication 3 n'ont pas d'effet catastrophique sur la sécurité du système.

En effet, comme on l'a vu précédemment, le processeur 2 et le module de communication 3 sont reliés à la mémoire principale 11 par l'intermédiaire d'un bus commun 12. Dès lors, un mode de défaillance du module de communication 3 pourrait conduire à des accès non souhaités à la mémoire 11, avec pour conséquence la modification des données ou du code utilisés par le processeur 2 qui sont stockés dans la mémoire 11. Si le processeur 2 réalise une fonction critique, ce mode de défaillance peut avoir un effet catastrophique sur la sécurité du système avionique, car le processeur 2 n'a aucun moyen de détecter une telle corruption de son code ou de ses données.

On cherche dès lors à prévenir l'effet d'un tel mode de défaillance du module de communication 3 sur la sécurité du système avionique.

On notera ici que la réception de trames AFDX n'est pas décrite dans ce qui suit, dans la mesure où la perte de données AFDX ou la réception de données AFDX erronées sont considérées comme n'ayant pas conséquence sur la sécurité du système avionique.

On a représenté sur la figure 2 la mémoire principale 11 telle que vue par le module de communication 3. La mémoire 11 est divisée en deux blocs :
- une zone non autorisée 12 : un accès du module de communication 3 dans cette zone 12 correspond à une erreur due à un disfonctionnement du module de communication 3 ou à une altération d'un pointeur ;
- une zone autorisée 13, qui contient les données manipulées par le module de communication 3.

Ces zones doivent notamment être préalablement définies, lors de la conception de l'équipement avionique.

De manière préférentielle, la zone non autorisée 12 de la mémoire 11 correspond à des éléments de la mémoire 11 qui sont réservés pour le processeur 2. Le programme et les données utilisés par le processeur 2 sont ainsi destinés à être stockés dans cette zone non autorisée 12.

Sur cette figure 2, on a représenté :
- par des flèches portant la référence 14 un accès normal du module de communication de données 3 à la mémoire 11 dans la zone autorisée 13;
- par une flèche portant la référence 15 un accès anormal du module de communication de données 3 à la mémoire 11, dans la zone non autorisée 12 ;
- par une flèche portant la référence 15 un accès anormal du module de communication de données 3 à la mémoire 11, dans la zone autorisée 13, du fait d'un comportement inattendu ou d'un pointeur corrompu.

Selon l'invention, et en référence à la figure 1, l'équipement selon le premier aspect de l'invention comporte en outre un module 17 de surveillance des accès à la mémoire principale 11 configuré pour détecter un accès du module de communication 3 dans la zone d'adresses non autorisée 12. Le module 17 est ainsi configuré pour détecter tout accès anormal dans la zone non autorisée 12 de la mémoire principale 11 (accès portant la référence 15 sur la figure 2). Le module 17 permet la mise en oeuvre d'un mécanisme de surveillance hardware, extérieur au microcontrôleur surveillé.

Le module 17 de surveillance des accès à la mémoire principale 11 surveille la provenance des données devant être écrites dans la mémoire 11 et analyse les adresses de rangement pour détecter un éventuel adressage d'un composant (ici le module de communication 3) dans une zone non autorisée.

Le module 17 de surveillance des accès à la mémoire principale 11 surveille ainsi le comportement du module de communication 3 tel que vu du côté du bus 12 partagé entre le processeur 2 et le module de communication 3.

Le module 17 peut notamment être configuré pour déclencher une interruption en cas d'accès du module de communication 3 en écriture dans la zone d'adresses non autorisée 12. Le processeur 2 peut quant lui être configuré pour générer une exception lorsque le module de surveillance déclenche une interruption.

Le module 17 peut également être configuré pour déclencher une remise à l'état initial (ou reset) de l'ensemble de la fonction processeur 2 en cas d'accès du module de communication 3 en écriture dans la zone d'adresses non autorisée 12. La fonction communication peut également être remise à l'état initial afin de bloquer le canal de communication sortant et empêcher l'émission de toute donnée potentiellement erronée.

Lorsque la zone non autorisée 12 correspond au code et données utilisés par le processeur 2, on comprend que l'invention permet de détecter l'occurrence d'un dysfonctionnement du module de communication 3 susceptible d'engendrer une altération du code et données utilisés par le processeur 2 et par conséquent d'altérer les fonctions critiques remplies par le processeur 2.

Selon un mode de réalisation possible, le module 17 de surveillance des accès à la mémoire principale 11 surveille le signal de Code de Transaction (TC) et les adresses du microcontrôleur 1, et provoque une interruption lorsque l'équation logique suivante est observée :
- Le code de transaction correspond à une demande d'accès du module de communication 3 ; ET
- La mémoire est adressée en mode Ecriture ; ET
- La zone mémoire adressée est en dehors de la zone autorisée 13 pour les transactions issues du module de communication 3.

Le module de surveillance des accès mémoire 17 est préférentiellement un composant programmable (composant PLD selon la terminologie anglo-saxonne "Programmable Logic Device ») particulièrement simple développé au niveau A de la spécification DO-254. Il en découle que les ressources nécessaires pour le développement de ce composant sont la logique combinatoire, des verrous contrôlés par une seule horloge, sans mise en oeuvre d'une machine d'états.

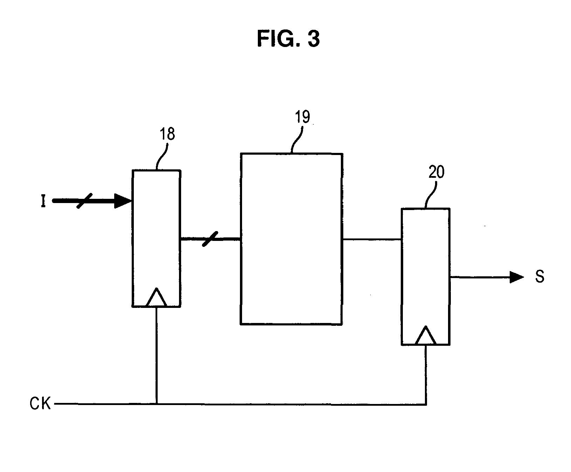

On a représenté sur la figure 3 un diagramme fonctionnel d'un mode de réalisation d'un tel composant programmable. Le composant comprend une première bascule 18 recevant notamment en entrée I les signaux transitant sur le bus partagé 12 entre le microcontrôleur 1 et la mémoire principal 11. Un signal d'horloge CK est fourni à la première bascule 18 de sorte qu'elle recopie l'entrée sur un front du signal d'horloge (réalisant de la sorte un échantillonnage des signaux transitant sur le bus partagé, notamment des signaux correspondant aux accès du module de communication à la mémoire principale). L'entrée recopiée est fournie à un module 19 de décodage d'adresses mettant par exemple en oeuvre l'équation logique présentée ci-dessus pour fournir un signal de sortie avertissant d'un éventuel accès en écriture en dehors de la zone autorisée. Ce signal de sortie est fourni à une seconde bascule 20 qui le recopie à une cadence définie par le signal d'horloge CK pour fournir un signal de sortie S indicatif d'une éventuelle erreur d'adressage.

Selon un mode de réalisation préférentiel de l'invention, on réalise un deuxième mécanisme de sécurisation pour prévenir toute défaillance du module de communication 3 entraînant la transmission de trames AFDX erronées. Il s'agit notamment de prévenir tout accès anormal du module de communication 3 dans la zone autorisée 13 de la mémoire principale 11 (accès portant la référence 16 sur la figure 2), par exemple du fait d'erreurs de conception du module de communication 3.

Pour ce faire, le processeur 2 est configuré pour calculer une somme de contrôle (par exemple via un contrôle de redondance cyclique CRC) pour des trames de données issues du module de communication 3 avant leur transmission sur le réseau avionique. Des trames altérées par le module de communication 3 peuvent de la sorte être détectées par les appareils connectés à l'équipement selon le premier aspect de l'invention via le réseau avionique AFDX.

Enfin, on aura compris que l'invention n'est pas limitée à un équipement selon le premier aspect, mais s'étend également à un procédé de sécurisation d'un équipement électronique comprenant un processeur et un module de communication assurant une interface avec un réseau de données avionique, le processeur et le module de communication étant embarqués au sein d'un microcontrôleur de sorte qu'ils partagent une même mémoire, le procédé comprenant la mise en oeuvre d'une surveillance des accès à la mémoire partagée pour détecter un accès du module de communication dans une zone d'adresses non autorisée.

## Revendications

1. Equipement électronique comprenant un processeur (2) programmé pour réaliser une fonction critique au sens des spécifications avioniques, une mémoire (11) et un module de communication (3) assurant une interface avec un réseau de données avionique, **caractérisé en ce que** le module de communication (3) et le processeur (2) sont embarqués au sein d'un même microcontrôleur (1) de sorte que la mémoire (11) est partagée entre le processeur et le module de communication, et **en ce qu'**il comporte en outre un module de surveillance des accès à la mémoire (17) configuré pour détecter un accès du module de communication (3) dans une zone d'adresses non autorisée (12) de la mémoire (11).

2. Equipement selon la revendication 1, dans lequel le module de surveillance (17) est configuré pour déclencher une interruption et une remise à l'état initial du microcontrôleur en cas d'accès du module de communication (3) en écriture dans la zone d'adresses non autorisée.

3. Equipement selon l'une des revendications 1 à 2, dans lequel la zone d'adresses non autorisée correspond à une zone d'adresses réservée au logiciel s'exécutant sur le processeur.

4. Equipement selon l'une des revendications 1 à 3, dans lequel la zone d'adresses non autorisée est préalablement définie lors de la conception de l'équipement électronique.

5. Equipement selon l'une des revendications 1 à 4, dans lequel le processeur et le module de communication sont reliés à la mémoire par l'intermédiaire d'un bus commun (12).

6. Equipement selon l'une des revendications 1 à 5, dans lequel le processeur comporte une unité de gestion mémoire responsable de l'accès à la mémoire principale demandé par le processeur.

7. Equipement selon l'une des revendications 1 à 6, dans lequel le module de communication fournit une interface AFDX avec le réseau avionique.

8. Equipement selon l'une des revendications 1 à 7, dans lequel le processeur est configuré pour calculer une somme de contrôle pour des trames de données issues du module de communication avant leur transmission sur le réseau avionique.

9. Equipement selon l'une des revendications 1 à 8, dans lequel le module de surveillance est un dispositif électronique simple au sens de la spécification DO-254.

10. Equipement selon l'une des revendications 1 à 9, dans lequel le processeur est programmé pour réaliser une fonction critique au sens de la spécification DO-254.

11. Procédé de sécurisation d'un équipement électronique comprenant un processeur programmé pour réaliser une fonction critique au sens des spécifications avioniques et un module de communication assurant une interface avec un réseau de données avionique, le processeur et le module de communication étant embarqués au sein d'un même microcontrôleur de sorte qu'ils partagent une même mémoire, comprenant la mise en oeuvre d'une surveillance des accès à la mémoire partagée pour détecter un accès du module de communication dans une zone d'adresses non autorisée.

## Claims

1. Electronic equipment comprising a processor (2) programmed for performing a critical function in the sense of avionic specifications, a memory (11) and a communication module (3) providing an interface with an avionics data network, **characterized in that** the communication module (3) and the processor (2) are embedded within a same microcontroller (1) such that the memory (11) is shared between the processor and the communication module, and **in that** it further includes a memory access monitoring module (17) configured for detecting an access by the communication module (3) in an unauthorized address area (12) of the memory (11) .

2. The equipment according to claim 1, wherein the monitoring module (17) is configured to trigger an interrupt and a reset of the microcontroller in the event of write access by the communication module (3) in the unauthorized address area.

3. The equipment according to one of claims 1 to 2, wherein the unauthorized address area corresponds to an area reserved for the software executing on the processor.

4. The equipment according to one of claims 1 to 3, wherein the unauthorized address area is predefined during the design of the electronic equipment.

5. The equipment according to one of claims 1 to 4, wherein the processor and the communication module are linked to the memory via a common bus (12).

6. The equipment according to one of claims 1 to 5, wherein the processor includes a memory management unit responsible for the access to the main memory requested by the processor.

7. The equipment according to one of claims 1 to 6, wherein the communication module provides an AFDX interface with the avionics network.

8. The equipment according to claims 1 to 7, wherein the processor is configured to calculate a checksum for the data frames coming from the communication module before their transmission over the avionics network.

9. The equipment according to one of claims 1 to 8, wherein the monitoring module is a simple electronic device within the meaning of specification DO-254.

10. The equipment according to one of claims 1 to 9, wherein the processor is programmed to perform a critical function within the meaning of specification DO-254.

11. A method for securing electronic equipment comprising a processor programmed for performing a critical function in the sense of avionic specifications and a communication module providing an interface with an avionics data network, the processor and the communication module being embedded in a same microcontroller so as to share the same memory, comprising the implementation of monitoring of access to the shared memory for detecting access by the communication module in an unauthorized address area.

## Patentansprüche

1. Elektronische Einrichtung, folgendes umfassend: einen Prozessor (2), der dafür programmiert ist, eine kritische Funktion im Sinne der Avionik-Vorschriften auszuführen, einen Speicher (11) und ein Kommunikationsmodul (3), das eine Schnittstelle mit einem Avionik-Datennetz bereitstellt, und **dadurch gekennzeichnet, dass** das Kommunikationsmodul (3) und der Prozessor (2) in ein und demselben Mikrokontroller (1) untergebracht sind, und dies derart, dass der Speicher (11) von dem Prozessor und dem Kommunikationsmodul gemeinsam genutzt wird, und dadurch, dass sie außerdem ein Überwachungsmodul für Zugriffe auf den Speicher (17) umfasst, das dafür eingerichtet ist, einen Zugriff des Kommunikationsmoduls (3) auf einen nicht zugelassenen Adressbereich (12) des Speichers (11) zu detektieren.

2. Einrichtung nach Anspruch 1, bei der das Überwachungsmodul (17) dafür eingerichtet ist, für den Fall, dass das Kommunikationsmodul (3) schreibend auf den nicht zugelassenen Adressbereich zugreift, eine Unterbrechung und ein Rücksetzen auf den Anfangszustand des Mikrokontrollers auszulösen.

3. Einrichtung nach einem der Ansprüche 1 bis 2, bei der der nicht zugelassene Adressbereich einem Adressbereich entspricht, der für Programme reserviert ist, die auf dem Prozessor ausgeführt werden.

4. Einrichtung nach einem der Ansprüche 1 bis 3, bei der der nicht zugelassene Adressbereich vorab bei der Konzeption der elektronischen Einrichtung festgelegt wird.

5. Einrichtung nach einem der Ansprüche 1 bis 4, bei der der Prozessor und das Kommunikationsmodul mittels eines gemeinsamen Busses (12) mit dem Speicher verbunden sind.

6. Einrichtung nach einem der Ansprüche 1 bis 5, bei der der Prozessor eine Speicherverwaltungseinheit umfasst, die für vom Prozessor veranlasste Zugriffe auf den Hauptspeicher zuständig ist.

7. Einrichtung nach einem der Ansprüche 1 bis 6, bei der das Kommunikationsmodul eine AFDX-Schnittstelle mit dem Avioniknetz bereitstellt.

8. Einrichtung nach einem der Ansprüche 1 bis 7, bei der der Prozessor dafür eingerichtet ist, für Datenpakete, die vom Kommunikationsmodul kommen, eine Prüfsumme zu berechnen, und dies bevor diese im Avioniknetz übertragen werden.

9. Einrichtung nach einem der Ansprüche 1 bis 8, bei der das Überwachungsmodul eine einfache elektronische Vorrichtung im Sinne der Vorschrift DO-254 ist.

10. Einrichtung nach einem der Ansprüche 1 bis 9, bei der der Prozessor dafür programmiert ist, eine kritische Funktion im Sinne der Vorschrift DO-254 auszuführen.

11. Verfahren zum Absichern einer elektronischen Einrichtung, die einen Prozessor, der dafür programmiert ist, eine kritische Funktion im Sinne der Avionik-Vorschriften auszuführen, und ein Kommunikationsmodul, das eine Schnittstelle mit einem Avionik-Datennetz bereitstellt, umfasst, wobei der Prozessor und das Kommunikationsmodul in ein und demselben Mikrokontroller untergebracht sind, und dies derart, dass sie ein und denselben Speicher gemeinsam nutzen, wobei es das Einsetzen einer Überwachung der Zugriffe auf den gemeinsam genutzten Speicher umfasst, um einen Zugriff des Kommunikationsmoduls auf einen nicht zugelassenen Adressbereich zu detektieren.
